# EUROPEAN PATENT APPLICATION

(11) **EP 2 913 908 A2**
(43) Date of publication of application: **02.09.2015**
(21) Application number: 15153818.8
(22) Date of filing: 04.02.2015
(51) Int. Cl.: H02K 3/14, H02K 15/00, H02K 15/06

(54) **Method of manufacturing a rotor coil and corresponding rotary electrical machine**

(30) Priority: 27.02.2014 JP 2014037603; 03.02.2015 JP 2015019037
(71) Applicant: Kabushiki Kaisha Toshiba, Tokyo 105-8001 (JP)
(72) Inventor: Ohashi, Tomoaki, Tokyo (JP); Asai, Satoru, Tokyo (JP); Fujita, Yoshihiro, Tokyo (JP); Osada, Oki, Tokyo (JP); Ishikawa, Satsumi, Tokyo (JP); Mori, Junji, Tokyo (JP); Fujita, Takashi, Tokyo (JP); Nagasaki, Terumasa, Tokyo (JP)
(74) Representative: Henkel, Breuer & Partner

(57) **Abstract**

A method of manufacturing a rotor coil (7) includes steps of - preparing a wire strand (31) bundling a plurality of wires (20a) and a reinforcing member (32) configured to reinforce the wire strand (31), - arranging the wire strand (31) and the reinforcing member (32) to bring an end (31a) of the wire strand (31) and an end (32a) of the reinforcing member (32) into contact with each other, the wire strand (31) being arranged to have a longitudinal direction perpendicular to a boundary (25) between the wire strand (31) and the reinforcing member (32) and to include the plurality of wires (20a) with an inclined longitudinal direction thereof on a first outer surface (F1) inclining with respect to the longitudinal direction of the wire strand (31) and - driving a rotating tool (30) along the boundary (25) on the first outer surface (F1).

## Description

### FIELD

Embodiments described herein relate generally to a method of manufacturing a rotor coil and a rotary electrical machine.

### BACKGROUND

A rotor coil of a variable-speed generator motor used for pumped-storage power generation and so on is manufactured by applying a manufacturing method in which, for example, a long copper band is formed into a coil state by so-called an edgewise-bending, a manufacturing method in which strip-state plural copper bands are connected by brazing or a TIG (Tungsten Inert Gas) welding to form into the coil state, and so on.

Here, in the rotor coil of the variable-speed generator motor, a reinforcing member whose rigidity is high is joined by the TIG welding and so on to an end part of a wire strand in which plural wires are bundled to prevent deformation of a coil end part by a centrifugal force. Note that copper, copper alloy, and so on are generally used for materials of the wire strand and the reinforcing member.

However, copper and copper alloy are materials which are difficult to be welded. Therefore, in the manufactured rotor coil, defects are easy to occur at welded parts, and the sufficient mechanical strength cannot be obtained after welding, and further, deformation after the welding, and so on are worried.

Problems to be solved by the embodiments are to provide a method of manufacturing a rotor coil and a rotary electrical machine capable of securing desired mechanical strength while suppressing occurrences of defects and deformations.

### BRIEF DESCRIPTION OF THE DRAWINGS

FIG. 1 is a view schematically illustrating a cross section of a rotary electrical machine including a rotor coil according to a first embodiment.
FIG. 2 is a sectional view schematically illustrating a structure of the rotor coil in FIG. 1 and a peripheral part thereof.
FIG. 3 is a perspective view schematically illustrating a method of manufacturing the rotor coil in FIG. 1 from a first outer surface side.
FIG. 4 is a view schematically illustrating the method of manufacturing the rotor coil in FIG. 3 from a planar direction (an upper surface direction).
FIG. 5 is a perspective view schematically illustrating one in which a part of manufacturing steps is changed from the method of manufacturing the rotor coil in FIG. 3.
FIG. 6 is a perspective view schematically illustrating one in which a part of manufacturing steps is changed from the method of manufacturing the rotor coil in FIG. 3 and FIG. 5.
FIG. 7 is a perspective view schematically illustrating one in which a part of manufacturing steps is changed from the method of manufacturing the rotor coil in FIG. 3, FIG. 5 and FIG. 6.
FIG. 8 is a perspective view schematically illustrating one in which a part of manufacturing steps is changed from the method of manufacturing the rotor coil in FIG. 3, and FIG. 5 to FIG. 7.
FIG. 9 is a view schematically illustrating a method of manufacturing a rotor coil according to a second embodiment from a second outer surface side.
FIG. 10 is a view schematically illustrating the method of manufacturing the rotor coil in FIG. 9 from a second outer surface side.
FIG. 11 is a perspective view schematically illustrating a method of manufacturing a rotor coil according to a third embodiment from a first outer surface side.
FIG. 12 is a perspective view schematically illustrating one in which a part of manufacturing steps is changed from the method of manufacturing the rotor coil in FIG. 11.
FIG. 13 is a perspective view schematically illustrating a manufacturing method of a rotor coil according to a fourth embodiment from a first outer surface side.
FIG. 14 is a perspective view schematically illustrating one in which a part of manufacturing steps is changed from the method of manufacturing the rotor coil in FIG. 13.
FIG. 15 is a perspective view schematically illustrating one in which a part of the manufacturing steps is changed from the method of manufacturing the rotor coil in FIG. 13 and FIG. 14.
FIG. 16 is a perspective view schematically illustrating one in which a part of the manufacturing steps is changed from the method of manufacturing the rotor coil in FIG. 13 to FIG. 15.

### DETAILED DESCRIPTION

A method of manufacturing a rotor coil according to an embodiment includes preparing a wire strand including a plurality of wires and a reinforcing member configured to reinforce the wire strand, each of the wires being bundled to form the wire strand; arranging the wire strand and the reinforcing member to bring an end of the wire strand and an end of the reinforcing member into contact with each other, the wire strand being arranged to have a longitudinal direction perpendicular to a boundary between the wire strand and the reinforcing member and to include the plurality of wires with an inclined longitudinal direction thereof on a first outer surface inclining with respect to the longitudinal direction of the wire strand; rotary driving a tool at the boundary on the first outer surface so as to enter the boundary; and moving the rotary driven tool on the boundary along the first outer surface.

Hereinafter, embodiments are described based on the drawings.

### <First Embodiment>

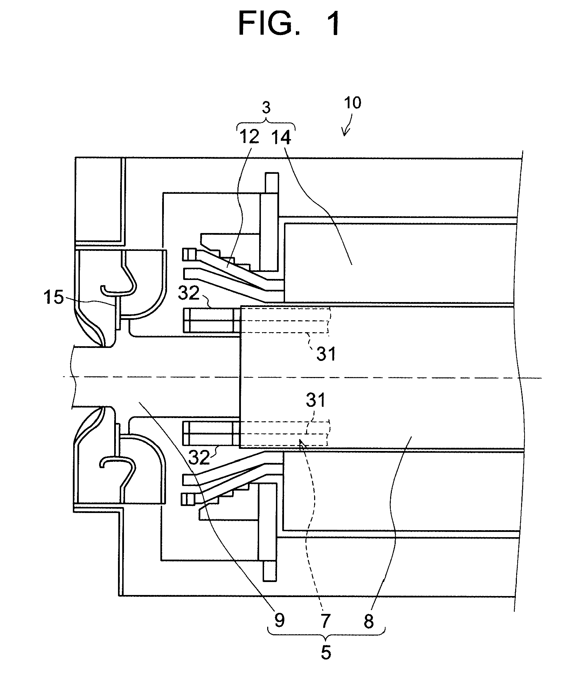

FIG. 1 illustrates a rotary electrical machine 10 including rotor coils 7 manufactured by a manufacturing method of a rotor coil according to the present embodiment. As illustrated in FIG. 1, this rotary electrical machine 10 is, for example, a variable-speed rotary electrical machine, and more specifically, for example, a variable-speed generator motor used for pumped-storage power generation, and so on.

The rotary electrical machine 10 includes a stator 3, a rotor 5, and so on. Besides, the rotary electrical machine 10 includes a cooling mechanism and so on having, for example, fans 15 and airflow ducts symmetrically provided at both ends of a rotation shaft 9 of the rotor 5 respectively. The rotation shaft 9 is supported by a structure part including the stator 3 via a bearing mechanism. The stator 3 includes a stator coil 12 and a stator core 14. On the other hand, the rotor 5 includes a rotor core 8 and the rotor coils 7 integrally provided with the rotation shaft 9.

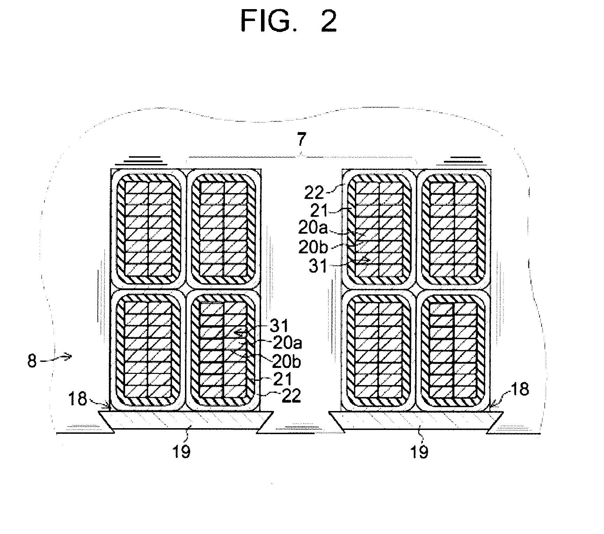

As illustrated in FIG. 2, the rotor core 8 is provided with plural slots 18 dispersed in a circumferential direction of the rotation shaft 9 to accommodate the rotor coils 7. As illustrated in FIG. 2, each rotor coil 7 is accommodated in a state spanning, for example, a pair of slots 18 adjacent with each other. The slots 18 where the rotor coil 7 is accommodated are closed by wedges 19 wedged from opening sides thereof.

Besides, the rotor coil 7 is made up of a wire strand 31, an insulating layer 21, an electric field relaxation layer (low-resistance corona prevention layer) 22, and so on as illustrated in FIG. 2. The wire strand 31 is formed by bundling plural wires 20a each of which is performed, for example, an insulation coating 20b. The insulating layer 21 is formed by multiply winding a mica tape and so on at an outer periphery of the wire strand 31. The electric field relaxation layer 22 is formed by winding so-called a semiconductive tape and so on at a further outer periphery of the insulating layer 21.

Here, in the rotor coil 7 for the variable-speed generator motor (variable-speed rotary electrical machine), a coil end part is made up by joining a reinforming member 32 to an end part of the wire strand 31 as illustrated in FIG. 1. Namely, the reinforcing member 32 reinforcing the wire strand 31 is joined to the wire strand 31 to prevent that the coil end part of the rotor coil 7 is deformed by a relatively large centrifugal force acting on the rotor 5 at an operation time of the rotary electrical machine (variable-speed generator motor) 10 accompanied by a speed change.

Accordingly, the reinforcing member 32 has a rectangular parallelepiped solid structure to obtain the rigidity (mechanical strength) higher than the wire strand 31 in which the wires are bundled. Note that the reinforcing member 32 is supported by a rotor main body via a predetermined supporting member. Besides, the reinforcing member 32 and the wires 20a of the wire strand 31 are made up by using copper and copper alloy as materials. Note that it is also possible to make up the reinforcing member 32 and the wires 20a of the wire strand 31 by using aluminum and aluminum alloy as the materials.

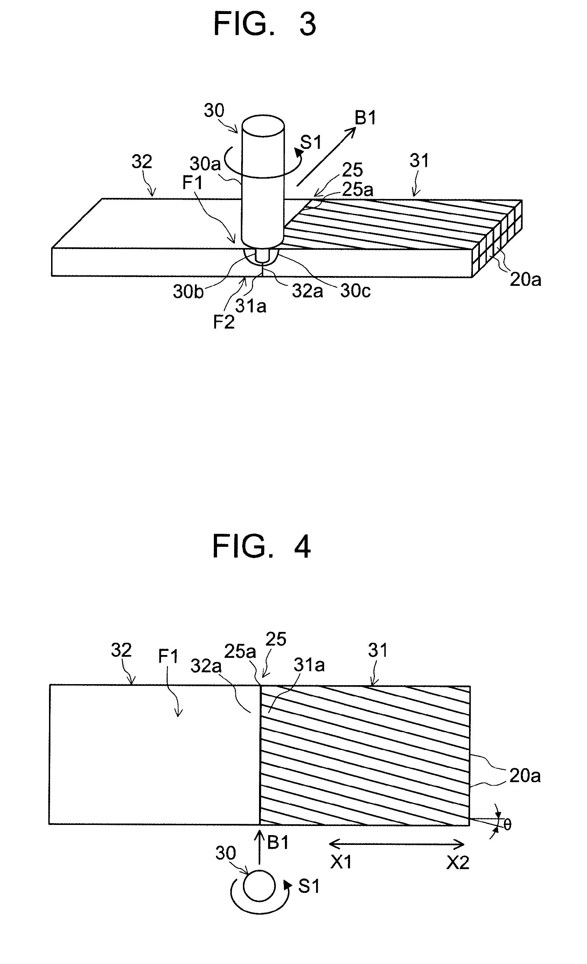

Next, a method of manufacturing a rotor coil of the present embodiment which suitably enables the joining between the wire strand 31 and the reinforcing member 32 is described mainly based on FIG. 3 and FIG. 4. The method of manufacturing the rotor coil of the present embodiment includes a contact step(the contact step having preparing a wire strand including a plurality of wires and a reinforcing member, and arranging the wire strand and the reinforcing member) and a first joining step (the first joining step having rotary driving a tool at the boundary on the first outer surface, and moving the rotary driven tool on the boundary along the first outer surface). At first, in the contact step, end parts 31a, 32a of the wire strand 31 and the reinforcing member 32 are brought into contact with each other as illustrated in FIG. 3 and FIG. 4. More specifically, the wire strand 31 and the reinforcing member 32 in such a disposition relationship are fixed on a predetermined processing board via, for example, a dedicated jig and so on. When a length of the wire strand 31 and a length of the reinforcing member 32 fixed as stated above are summed up, it becomes, for example, a length of approximately 5 m.

Here, groove shapes of the wire strand 31 and the reinforcing member 32 to be joining objects are each so-called an I groove (I-shape groove). Namely, respective whole interfaces (respective facing end faces of the end parts 31 a, 32a with each other) of the wire strand 31 and the reinforcing member 32 which are directly brought into contact in the contact step are both formed by flat surfaces.

Next, in the first joining step, as illustrated in FIG. 3 and FIG. 4, a tool 30 rotary driving in an arrow S1 direction is penetrated from a first outer surface F1 side of a boundary part 25 between the wire strand 31 and the reinforcing member 32 whose end parts 31a, 32a are brought into contact with each other, and is slided (moved) in an arrow B1 direction along an interface 25a of the boundary part 25.

The tool 30 is a joining tool in approximately a stepped columnar shape having a large diameter shoulder part 30a and a small diameter projecting part 30b provided at a tip part side of the shoulder part 30a. Besides, the tool 30 is movable in triaxial directions and rotates (rotary drives) while using an axial center of itself as a rotation center. The projecting part 30b is a penetration part directly penetrated into the boundary part 25 (joining object parts 30c, 30d). A projecting length of the projecting part 30b is appropriately set in accordance with a thickness of the boundary part 25 in a penetrating direction.

Besides, operations of the tool 30 are adjusted such that a rotation speed in the arrow S1 direction is, for example 800 rpm to 1400 rpm, a moving speed in the arrow B1 direction is, for example, 20 cm/min to 30 cm/min, and a load penetrating the projecting part 30b into the boundary part 25 becomes, for example, 2000 kgf to 5000 kgf.

Here, in the first joining step, as illustrated in FIG. 3 and FIG. 4, the boundary part 25 (the joining object part 30c) where the tool 30 (the projecting part 30b) which rotates while sliding penetrates is softened by a generated frictional heat, then cured after a base material is kneaded caused by a generated plastic flow. As a result, The boundary part 25 is friction stir welded (FSW: Friction Stir Welding) from the first outer surface F1 side (the joining object part 30c side).

In more detail, in the method of manufacturing the rotor coil of the present embodiment, as illustrated in FIG. 3 and FIG. 4, a longitudinal direction of a wire strand 31 main body (arrows X1-X2 direction) relative to the interface 25a of the boundary part 25 between the wire strand 31 and the reinforcing member 32 which are brought into contact in the contact step is in a perpendicular disposition relationship.

Note that individual wires 20a making up the wire strand 31 are bundled in a state in which longitudinal directions of the individual wires 21a are inclined (each having an inclination of an angle θ) relative to the longitudinal direction of the wire strand 31 main body (the arrows X1-X2 direction) when it is seen from the first outer surface F1 side as illustrated in FIG. 3 and FIG. 4.

As mentioned above, in the first joining step, as illustrated in FIG. 3 and FIG. 4, a tool 30 rotary driving in an arrow S1 direction is penetrated from a first outer surface F1 side of a boundary part 25 between the wire strand 31 and the reinforcing member 32 whose end parts 31a, 32a are brought into contact with each other, and is slided (moved) in an arrow B1 direction along an interface 25a of the boundary part 25.

At this time, the tool 30 rotary driving in the arrow S1 direction generates a friction stir force which winds up the end parts of the respective wires 37b (the end part 37a of the wire strand 37) each inclining in the wire strand 37 in the arrow S1 direction, and acts to change a direction of the end part of each inclining wire 37b to be perpendicular to the interface 25a. As a result, adhesiveness between an end face of each wire 37b of the wire strand 37 and the end face of the reinforcing member 32 improves, and it becomes possible to increase a joining strength.

As stated above, according to the method of manufacturing the rotor coil of the first embodiment, it is possible to improve the joining strength between the wire strand 31 and the reinforcing member 32. As a result, according to the manufactured rotor coil, it is possible to obtain desired mechanical strength.

Therefore, according to the method of manufacturing the rotor coil of the present embodiment, it is possible to suppress lowering of strength resulting from the thermal effect at the boundary part 25 (base material), and to secure the desired mechanical strength. Besides, in the method of manufacturing the present embodiment, the reinforcing member 32 and the wire strand 31 made of copper and copper alloy being the material difficult to be welded are joined with each other without using the welding technology such as the TIG welding (by using the friction stir welding which is not accompanied by a melting phenomenon being a process suitable for the joining of the material difficult to be welded), and therefore, it is possible to suppress occurrences of defects and deformations at the joining part. Further, according to the method of manufacturing the present embodiment, it is not necessary to process the groove shape at the joining part, to perform preheating, and so on which are, for example, required when welding is performed, and it is possible to reduce a manufacturing cost.

Besides, according to the rotary electrical machine 10 including the rotor coil 7 manufactured as stated above, it is possible to increase the suppression effect for the deformation and so on of the coil end part resulting from the centrifugal force at the operation time accompanied by the speed change. Further, in the rotary electrical machine 10, it is possible to substantially improve the mechanical strength at the joining part between the wire strand 31 and the reinforcing member 32, and therefore, it is possible to closely dispose the joining part between the wire strand 31 and the reinforcing member 32 in a vicinity of the rotor core 8 where a large stress is structurally easy to be applied.

Here, the method of manufacturing the rotor coil of the present embodiment may have a coating removal step (removing the insulation coating) before the contact step. This coating removal step is a step removing the insulation coating 20b in advance from at least the end parts (a part making up a part to be friction stir welded) at a side to be in contact with the reinforcing member 32 of the plural wires 20a illustrated in FIG. 2 by, for example, cutting and so on.

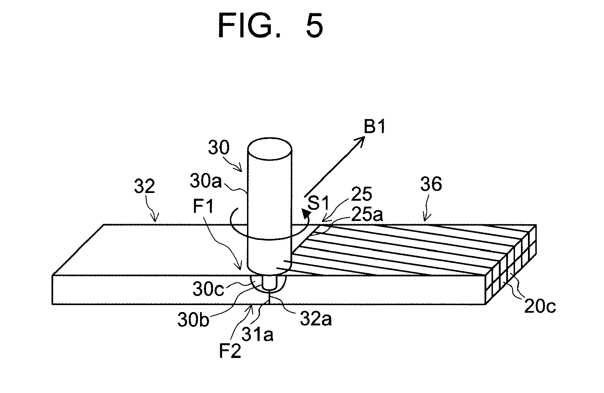

Namely, as illustrated in FIG. 5, the first joining step may be performed for the reinforcing member 32 and a wire strand 36 in which at least the insulation coating at the joining object part is removed. It is thereby possible to shorten a time of the friction stir welding of the reinforcing member 32 and the wire strand 36, and it is possible to manufacture the rotor coil whose quality is stable with a short joining time. Note that even when the insulation coating is not removed in advance, it is possible to evaporate the insulation coating (for example, an insulating resin) by a heat generation at the friction stir welding time by, for example, making the joining time long.

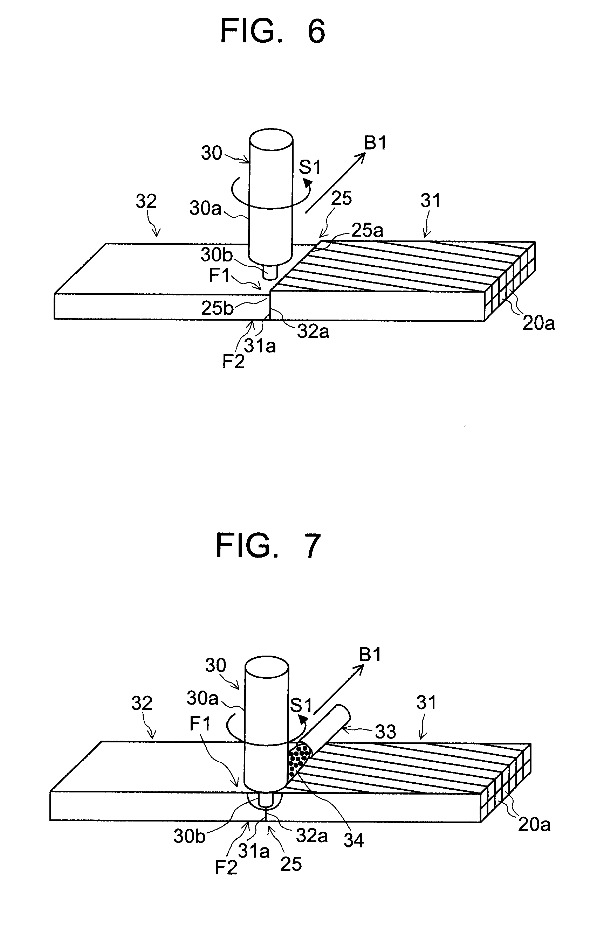

Besides, in the method of manufacturing the rotor coil of the present embodiment, as illustrated in FIG. 6, the first outer surface F1 at the boundary part 25 may have a level difference in which either one of the wire strand 31 side or the reinforcing member 32 side becomes higher. FIG. 6 exemplifies a level difference 25b in which the wire strand 31 side becomes higher. In this case, a length of the projecting part 30b of the tool 30 and so on is appropriately set, and thereby, the first joining step is performed by penetrating the rotary driving tool 30 from the first outer surface F1 side of the boundary part 25 having the level difference 25b and sliding along the interface 25a. It is thereby possible to join the reinforcing member 32 and the wire strand 31 whose thicknesses are different with each other.

Further, as illustrated in FIG. 7, the method of manufacturing the rotor coil of the present embodiment is able to be performed while supplying the same material as, for example, the material of the reinforcing member 32 (and the material of the wire 20a of the wire strand 31) on a moving path where the rotary driving tool 30 is slided. Specifically, as illustrated in FIG. 7, powder 34 of copper and copper alloy is supplied from a powder supply device 33 while the friction stir welding from the first outer surface F1 sides are performed. It is thereby possible to repair dents of each surface (each upper surface) of the wire strand 31 and the reinforcing member 32 generated by the sliding with, for example, an end face of the shoulder part 30a of the tool 30 during a process of the friction stir welding.

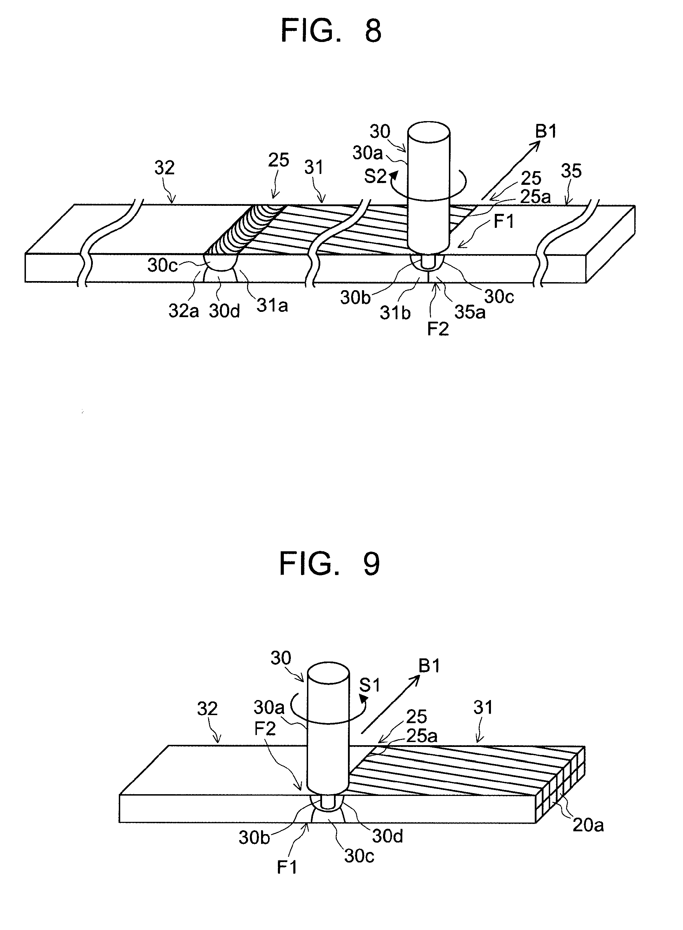

Besides, in the method of manufacturing the rotor coil of the present embodiment, the contact step and the first joining step are performed, and thereby, as illustrated in FIG. 8, it is also possible to respectively join one end parts 32a, 35a (a first end part 32a and a second end part 35a) of a pair of the reinforcing members 32, 35 (a first reinforcing member 32 and a second reinforcing member 35) to the both end parts 31a, 31b (a first end part 31a and a second end part 31 b) of the wire strand 31. Specifically, in the contact step, the one end parts 32a, 35a of the pair of reinforcing members 32, 35 are respectively brought into contact with the both end parts 31 a, 31b of the wire strand 31. Further, in the first joining step, the rotary driving tool 30 is penetrated from each of the first outer surface F1 sides at the respective boundary parts 25 (a first boundary and a second boundary) between the both end parts 31a, 31b of the wire strand 31 and the one end parts of the pair of reinforcing members 32, 35 which are brought into contact, and is slided along the interface 25a of each boundary part 25 to thereby join the pair of reinforcing members 32, 35 to the both end parts 31a, 31b of the wire strand 31.

Note that as illustrated in FIG. 8, when the end part 31b of the wire strand 31 and the one end part 35a of the reinforcing member 35 are friction stir welded, the disposition relationship between the wire strand and the reinforcing member is reversed (reversed in left and right) from the disposition relationship exemplified in FIG. 3, and FIG. 5 to FIG. 7 (the wire strand is disposed at the left side and the reinforcing member is disposed at the right side as illustrated in FIG. 8), and therefore, as illustrated in FIG. 8, it is desirable to slide the tool 30 in the arrow B1 direction while rotary driving in an arrow S2 direction.

### <Second Embodiment>

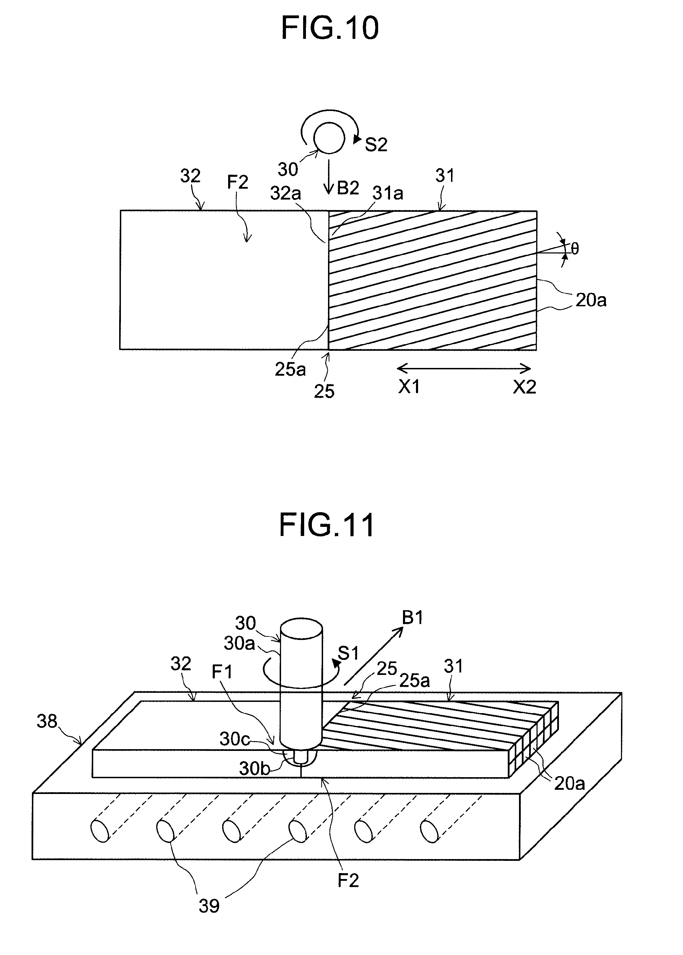

Next, a second embodiment is described based on FIG. 9 and FIG. 10. Incidentally, in FIG. 9 and FIG. 10, the same reference numerals are supplied for the same components as the components in the first embodiment illustrated in FIG. 3, FIG. 4 and so on, and redundant descriptions are not given.

In a method of manufacturing a rotor coil of the present embodiment, a second joining step (the second joining step having rotary driving a tool at the boundary on a second outer surface, and moving the rotary driven tool on the boundary along the second outer surface) as well as the contact step and the first joining step is performed.

Namely, in the second joining step, the wire strand 31 and the reinforcing member 32 in which the joining object part 30c is friction stir welded are turned over so that a second outer surface F2 side positioning at a rear surface side of the first outer surface F1 becomes an upper surface as illustrated in FIG. 9 and FIG. 10, and they are fixed on the processing board via the jig and so on. Further, in the second joining step, as illustrated in FIG. 9 and FIG. 10, the tool 30 rotary driving in the arrow S1 direction is penetrated from the second outer surface F2 side of the boundary part 25 (the joining object part 30d), and is slided (moved) in the arrow B1 direction along the interface 25a. Note that operation conditions of the tool 30 such as the rotation speed, the moving speed, and the load are adjusted as stated above. Namely, in the second joining step, as illustrated in FIG. 9 and FIG. 10, the second outer surface F2 side (the joining object part 30d) at the boundary part 25 is friction stir welded.

In more detail, in the second joining step performed from the second outer surface F2 side, for example, the step is performed while the rotation direction and the sliding direction of the tool 30 are reversed from the first joining step performed from the first outer surface F1 side. At this time, the tool 30 generates the friction stir force which winds up the end parts of the respective wires 20a in the arrow S2 direction, and acts to change the direction of the end part of each inclining wire 20a to be perpendicular to the interface 25a also in this case, and thereby, as described in the first embodiment, it becomes possible to increase the joining strength. Note that in the second joining step, the rotation direction and the sliding direction of the tool 30 may be set to be the same directions as the first joining step by appropriately adjusting and so on, for example, the rotation speed of the tool 30, the moving speed when the tool 30 is slided, and so on.

As it is already described, in the method of manufacturing the rotor coil of the present embodiment, the wire strand 31 and the reinforcing member 32 are friction stir welded by being divided into two passes (two times) of the first outer surface F1 side and the second outer surface F2 side, and therefore, it is possible to narrow down the thermal effect range where the boundary part 25 (base material) is affected by the thermal effect by the friction stir.

Namely, for example, when the boundary part 25 is friction stir welded in one pass, the friction stir is performed for a whole of a thickness direction of the boundary part 25 at one time, and therefore, for example, a tool whose size is enlarged is applied in consideration of rigidity and so on to incur a result of widening the thermal effect range. On the other hand, according to the method of manufacturing the present embodiment in which the boundary part 25 is friction stir welded in two passes, a tool whose size is rationally set small is applied by being divided into two times, and therefore, it is possible to narrow down the thermal effect range as a result.

Therefore, according to the method of manufacturing the rotor coil of the present embodiment, it is possible to suppress lowering of strength resulting from the thermal effect at the boundary part 25 (base material), and to secure the desired mechanical strength.

### <Third Embodiment>

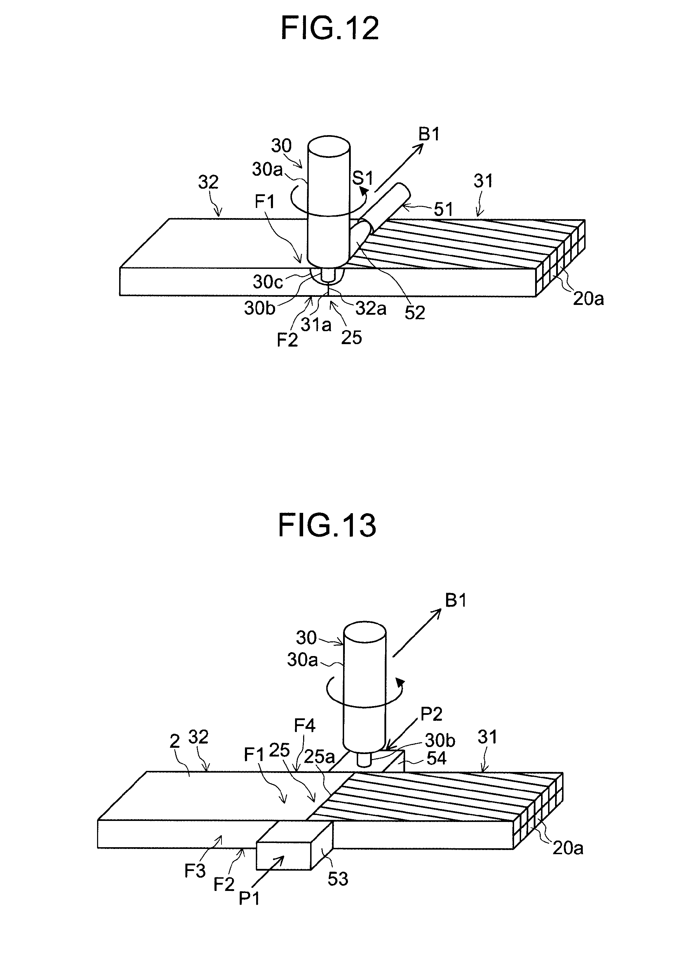

Next, a third embodiment is described based on FIG. 11 and FIG. 12. Incidentally, in FIG. 11 and FIG. 12, the same reference numerals are supplied for the same components as the components in the first embodiment illustrated in FIG. 3 and so on, and redundant descriptions are not given.

In a method of manufacturing a rotor coil of the present embodiment, the first joining step is performed (or the first and second joining steps are respectively performed) while cooling at least the boundary part 25 between the wire strand 31 and the reinforcing member 32. The cooling in this case is enabled by, for example, a cooling member inside which a coolant flows is brought into contact with the wire strand 31 and the reinforcing member 32, and so on.

Specifically, as illustrated in FIG. 11, for example, a processing board 38 made of copper and copper alloy to fix the wire strand 31 and the reinforcing member 32 described in the first embodiment is applied as the cooling member. Further, a flow path 39 of the coolant to make, for example, cooling water and so on flow is formed inside the processing board 38.

Besides, instead of the above, as illustrated in FIG. 12, a shielding gas supply device 51 which supplies inert gas such as argon gas and helium gas as shielding gas 52 may be prepared, the shielding gas 52 is supplied to the boundary part 25 from the first outer surface F1 side (or the second outer surface F2 side) to cool the boundary part 25 when the first joining step (or the second joining step) is performed.

Therefore, according to the method of manufacturing the rotor coil of the third embodiment, heat generation generated at the friction stir welding time can be suppressed, and therefore, it is possible to suppress the lowering of the strength of the boundary part 25 (joining object part) resulting from the thermal effect, and thereby, it is possible to secure desired rigidity at the boundary part 25 where the wire strand 31 and the reinforcing member 32 are joined.

### <Fourth Embodiment>

Next, a fourth embodiment is described based on FIG. 13 to FIG. 16. Incidentally, in FIG. 13 to FIG. 16, the same reference numerals are supplied for the same components as the components in the first embodiment illustrated in FIG. 3 and so on, and redundant descriptions are not given.

In a method of manufacturing a rotor coil of the present embodiment, as illustrated in FIG. 13, at first, in the contact step, a pair of holding members 53, 54 are disposed so that the boundary part 25 between the wire strand 31 and the reinforcing member 32 whose end parts are brought into contact with each other is held from a third and a fourth outer surface F3, F4 sides positioning at respective side surface sides of the first and second outer surfaces F1, F2 in arrows P1, P2 directions. The pair of holding members 53, 54 are made up while using, for example, copper, copper alloy, and so on as a material.

Further, when performing to the first joining step (or when performing to the first and second joining steps), as illustrated in FIG. 13, the rotary driving tool 30 is penetrated into the one holding member 53 from the first outer surface F1 side (or the second outer surface F2 side), and is slided (moved) on the other holding member 54 along the interface 25a of the boundary part 25.

According to this manufacturing method, it is possible to prevent that the wires 20a are taken to pieces from the wire strand 31 main body, and so on in addition that it is possible to suppress that joining marks at the friction stir welding time by the projecting part (penetration part) 30b of the tool 30 remain at a surface (upper surface) of the boundary part 25 and so on. Note that after the joining of the boundary part 25, the joined pair of holding members 53, 54 may be removed from the wire strand 31 and the reinforcing member 32 sides.

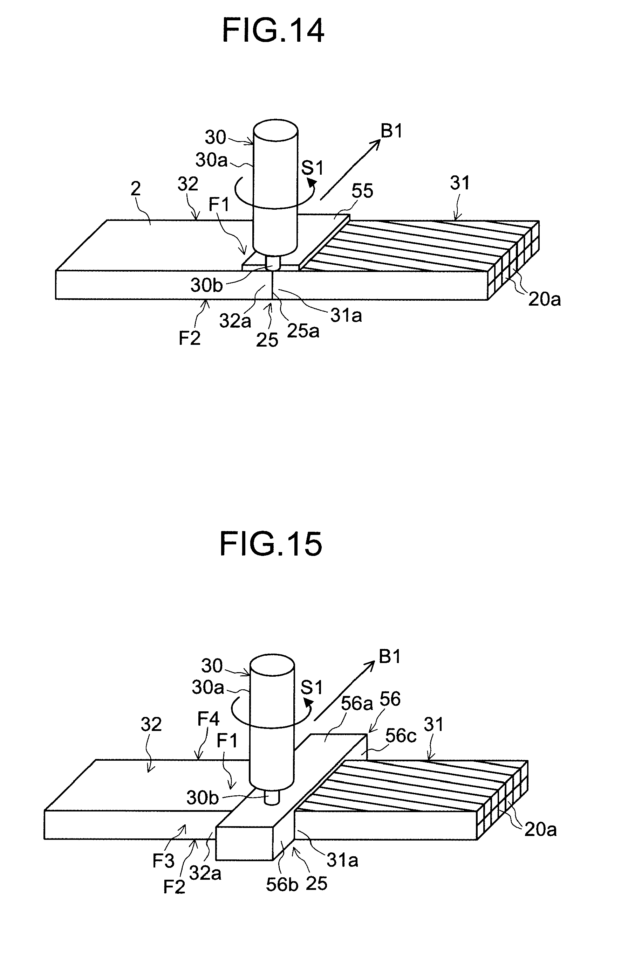

Besides, a method of manufacturing a rotor coil illustrated in FIG. 14 can also be applied. Namely, in the contact step, as illustrated in FIG. 14, a protective member 55 is further disposed on the first or second outer surface F1, F2 of the boundary part 25 between the wire strand 31 and the reinforcing member 32 whose end parts 31a, 32a are brought into contact with each other.

The protective member 55 is a rectangular thin sheet with a thickness of 2 mm or more whose material is copper or copper alloy. This protective member 55 is disposed to cover over the boundary part 25 (a boundary line on the first or second outer surface F1, F2) while aligning its own longitudinal direction in the sliding direction (the arrow B1 direction) of the tool 30, and is fixed at this position via a jig and so on. Besides, a length in a short side direction of the protective member 55 is made up to be a length of a diameter of the shoulder part 30a of the tool 30 or more. Further, a thickness of the protective member 55 is made up to be a thickness of a dent or more capable of being generated by the sliding with, for example, the end face of the shoulder part 30a of the tool 30 at the friction stir welding time.

After the protective member 55 as stated above is disposed, when performing to the first joining step (or when performing to the first and second joining steps), the rotary driving tool 30 is penetrated into the boundary part 25 via the protective member 55 from the first or second outer surface F1, F2 side, and is slided (moved) along the interface 25a. According to the manufacturing method as stated above, it is possible to compensate a degree of the dent generated by the sliding with the shoulder part 30a of the tool 30 with the thickness of the protective member 55, and to secure the joining strength of the boundary part 25 (joining object part).

Instead of the manufacturing method as stated above, it is possible to apply a method of manufacturing a rotor coil illustrated in FIG. 15. Namely, in the contact step, as illustrated in FIG. 15, a joining auxiliary member 56 whose cross section is in U-shape is disposed. This joining auxiliary member 56 includes a pair of holding parts 56b, 56c having a function of the pair of holding members 53, 54 illustrated in FIG. 13 and a protective part 56a having a function of the protective member 55 illustrated in FIG. 14.

As illustrated in FIG. 15, the pair of holing parts 56b, 56c hold the boundary part 25 between the wire strand 31 and the reinforcing member 32 whose end parts 31 a, 32a are brought into contact with each other from the third and fourth outer surfaces F3, F4 sides positioning at the side surface side of the first outer surfaces F1. On the other hand, the protective part 56a is mounted on the first or second outer surface F1, F2 of the boundary part 25. Namely, the joining auxiliary member 56 has a structure in which the pair of holding members 53, 54 illustrated in FIG. 13 and the protective member 55 illustrated in FIG. 14 are integrated.

After the joining auxiliary member 56 as stated above is disposed, when at least the first joining step is performed, the rotary driving tool 30 is penetrated into the one holding part 56b of the joining auxiliary member 56 from the first outer surface F1 side, and is slided (moved) on the other holding part 56c along the interface 25a of the boundary part 25. Note that when the second joining step is performed, after for example, the protective member 55 illustrated in FIG. 14 is disposed on the second outer surface F2, the friction stir welding using the tool 30 may be performed.

As it is already described, according to the method of manufacturing the rotor coil illustrated in FIG. 15, it is possible to prevent dispersion and so on of the wires 20a from the wire strand 31 and to prevent occurrences of the dent caused by the sliding with the shoulder part 31a of the tool 30 in addition that it is possible to suppress that the joining marks by the projecting part (penetration part) 30b of the tool 30 remain at the boundary part 25 and so on. Further, according to the method of manufacturing the rotor coil illustrated in FIG. 15, the joining auxiliary member 56 in which the protective part and the pair of holding parts are integrated is used, and thereby, workability when the joining auxiliary member 56 is set can be improved.

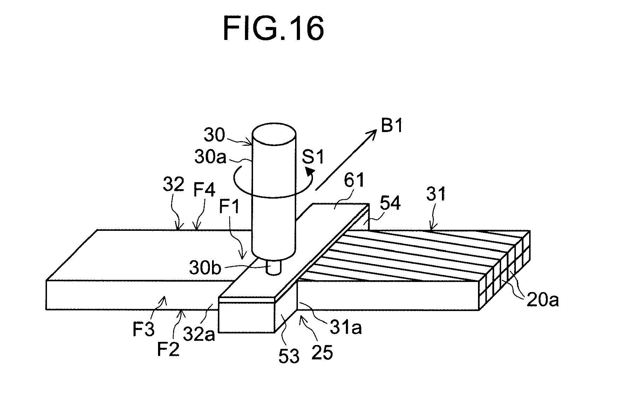

It goes without saying that instead of the above, a protective member 61 and the pair of holding members 53, 54 which are each made up by individual members as illustrated in FIG. 16 may be applied for the protective part 56a, the one holding part 56b, and the other holding part 56c of the joining auxiliary member 56 illustrated in FIG. 15. In this case, structures of the protective member 61 and the pair of holding members 53, 54 being separated bodies from one another are simple compared to the integrated joining auxiliary member 56, and therefore, it is possible to reduce manufacturing cost.

According to at least one embodiment described hereinabove, it is possible to manufacture a rotor coil capable of securing desired mechanical strength while suppressing occurrences of defects and deformations.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method of manufacturing a rotor coil, comprising:
preparing a wire strand including a plurality of wires and a reinforcing member configured to reinforce the wire strand, each of the wires being bundled to form the wire strand;
arranging the wire strand and the reinforcing member to bring an end of the wire strand and an end of the reinforcing member into contact with each other, the wire strand being arranged to have a longitudinal direction perpendicular to a boundary between the wire strand and the reinforcing member and to include the plurality of wires with an inclined longitudinal direction thereof on a first outer surface inclining with respect to the longitudinal direction of the wire strand;
rotary driving a tool at the boundary on the first outer surface so as to enter the boundary; and
moving the rotary driven tool on the boundary along the first outer surface.

2. The method of manufacturing the rotor coil according to claim 1,
wherein the wire strand is made up by bundling a plurality of wires, each of the plurality of wires being coated by insulation coating, and
the method of manufacturing the rotor coil further comprising:
removing the insulation coating from end parts of the plurality of wires of at least a side to be in contact with the reinforcing member, before the arranging the wire strand and the reinforcing member.

3. The method of manufacturing the rotor coil according to claim 1 or claim 2,
wherein each of respective whole contact surface of the wire strand and the reinforcing member to be contacted each other in the arranging the wire strand and the reinforcing member is formed as a flat surface.

4. The method of manufacturing the rotor coil according to any one of claims 1 to 3,
wherein the first outer surface has a level difference at the boundary between the wire strand and the reinforcing member,
in the rotary driving the tool, the tool is rotary driven at the boundary having the level difference, and
in the moving the rotary driven tool, the rotary driven tool is moved on the boundary having the level difference.

5. The method of manufacturing the rotor coil according to any one of claims 1 to 4,
wherein the moving the rotary driven tool is performed while supplying a same material as a material of the reinforcing member on a moving path where the rotary driving tool is moved.

6. The method of manufacturing the rotor coil according to any one of claims 1 to 5, further comprising;
preparing a second reinforcing member configured to reinforce the wire strand;
arranging the wire strand and the second reinforcing member to bring a second end of the wire strand and an end of the second reinforcing member into contact with each other, the wire strand being arranged to have the longitudinal direction perpendicular to a second boundary between the wire strand and the second reinforcing member and to include the plurality of wires with the inclined longitudinal direction thereof on the first outer surface inclining with respect to the longitudinal direction of the wire strand;
rotary driving a tool at the second boundary on the first outer surface so as to enter the second boundary; and
moving the rotary driven tool on the second boundary along the first outer surface.

7. The method of manufacturing the rotor coil according to any one of claims 1 to 6, further comprising;
rotary driving a tool at the boundary on a second outer surface positioning at a rear surface side of the first outer surface so as to enter the boundary; and
moving the rotary driven tool on the boundary along the second outer surface.

8. The method of manufacturing the rotor coil according to any one of claims 1 to 7, wherein the rotary driving the tool at the boundary on the first outer surface, the moving the rotary driven tool on the boundary along the first outer surface, the rotary driving the tool at the boundary on the second outer surface, and the moving the rotary driven tool on the boundary along the second outer surface are performed while cooling at least the boundary.

9. The method of manufacturing the rotor coil according to claim 8,
wherein the cooling of the boundary is performed by supplying shielding gas or bringing a cooling member with a coolant flowed therein into contact with the wire strand and the reinforcing member.

10. The method of manufacturing the rotor coil according to any one of claims 1 to 9,
wherein in the arranging the wire strand and the reinforcing member, a pair of holding members are disposed to hold the boundary from a third and a fourth outer surface sides positioning at side surface side of the first outer surface,
in the rotary driving the tool at the boundary on the first outer surface, the tool is rotary driven on the one holding member of the first outer surface side so as to enter the one holding member, and
in the moving the rotary driven tool on the boundary along the first outer surface, the rotary driven tool is moved on the one holding member, the boundary, and the other holding member along the first outer surface.

11. The method of manufacturing the rotor coil according to any one of claims 1 to 9,
wherein in the arranging the wire strand and the reinforcing member, a protective member is disposed on the boundary of the first outer surface side,
in the rotary driving the tool at the boundary on the first outer surface, the tool is rotary driven on the protective member so as to enter the boundary via the protective member, and
in the moving the rotary driven tool on the boundary along the first outer surface, the rotary driven tool is moved on the protective member along the first outer surface.

12. The method of manufacturing the rotor coil according to any one of claims 1 to 9,
wherein in the arranging the wire strand and the reinforcing member, a joining auxiliary member including: a pair of holding parts holding the boundary form a third and a fourth outer surface sides positioning at side surface side of the first outer surface; and a protective part mounted on the boundary of the first outer surface side, is disposed,
in the rotary driving the tool at the boundary on the first outer surface, the tool is rotary driven on the one holding member of the first outer surface side so as to enter the one holding member, and
in the moving the rotary driven tool on the boundary along the first outer surface, the rotary driven tool is moved on the one holding part, the protective part, and the other holding part along the first outer surface.

13. The method of manufacturing the rotor coil according to claim 12,
wherein the protective part, the one holding part, and the other holding part of the joining auxiliary member are respectively made up of individual members.

14. The method of manufacturing the rotor coil according to any one of claims 1 to 13,
wherein the rotor coil is a rotor coil for a variable-speed rotary electrical machine.

15. A rotary electrical machine comprising the rotor coil manufactured by the method according to any one of claims 1 to 14.
